# EUROPÄISCHE PATENTSCHRIFT

(11) **EP 3 128 229 B1**
(45) Veröffentlichungstag und Bekanntmachung des Hinweises auf die Patenterteilung: **22.02.2023**
(21) Anmeldenummer: 16181128.6
(22) Anmeldetag: 26.07.2016
(51) Int. Cl.: F21V 8/00

(54) **LEUCHTENOPTIK SOWIE LEUCHTE AUFWEISEND DIE LEUCHTENOPTIK**
LIGHTING OPTICS AND LUMINAIRE COMPRISING THE LIGHTING OPTICS
INSTRUMENT OPTIQUE D'ECLAIRAGE ET ECLAIRAGE COMPRENANT L'INSTRUMENT OPTIQUE D'ECLAIRAGE

(30) Priorität: 05.08.2015 DE 202015104088 U
(43) Veröffentlichungstag der Anmeldung: 08.02.2017
(73) Patentinhaber: Zumtobel Lighting GmbH, 6850 Dornbirn (AT)
(72) Erfinder: Keller, Katharina, 88161 Lindau (DE)
(74) Vertreter: Kiwit, Benedikt

(56) Entgegenhaltungen:
- JP-A- 2014 082 065
- KR-B1- 101 392 506
- US-A1- 2008 285 310
- US-A1- 2010 278 480

## Beschreibung

Die vorliegende Erfindung betrifft eine Leuchtenoptik mit einem flächigen Lichtleiter sowie ein an dem flächigen Lichtleiter angeordnetes Linsenblockraster zur Lichtabgabe. Die Erfindung betrifft ferner eine Leuchte mit einer entsprechenden Leuchtenoptik.

Ausgangspunkt der vorliegenden Erfindung ist die Verwendung von Linsenblockrastern (beispielsweise Glasblockrastern) in Kombination mit einem flächigen Lichtleiter. Bei einer derartigen Ausgestaltungsform sind der flächige Lichtleiter sowie das Linsenblockraster entsprechend miteinander verbunden. Insbesondere sind hierzu die Linsenblockrasterelemente in den Kontaktbereichen zum Lichtleiter mit dem Lichtleiter verklebt. Über die vorbezeichneten Kontaktbereiche kann das vorzugsweise seitlich über einen Stirnbereich des Lichtleiters beispielsweise mittels LEDs als Leuchtmittel in den Lichtleiter eingekoppelte Licht aus dem Lichtleiter und dann über die Linsenblockrasterelemente ausgekoppelt werden.

US2008285310, US2005270798, US2010278480, KR101392506 und JP2014082065 offenbaren Leuchtenoptiken.

Bei einer derartigen Leuchtenoptikanordnung ist häufig die Leuchtdichte nicht nach allen Abstrahlrichtungen gleich und ändert sich meist mit zunehmendem Abstand von dem Einkoppelbereich des Lichts in den Lichtleiter, so dass eine inhomogene Lichtabgabe erfolgt, die zu einer entsprechend blickrichtungsabhängigen unterschiedlichen Lichtwirkung der Leuchte bzw. Leuchtenbereiche in den unterschiedlichen Auskoppelbereichen des Linsenblockrasters und somit einem inhomogenen Lichtempfinden führt.

Es ist somit eine Aufgabe der vorliegenden Erfindung, eine Leuchtenoptik gemäß der eingangs genannten Art bereitzustellen, welche eine besonders homogen Lichtabgabe ermöglicht.

Diese Aufgabe wird durch den Gegenstand des unabhängigen Anspruchs gelöst. Die abhängigen Ansprüche bilden den zentralen Gedanken der Erfindung in besonders vorteilhafter Weise weiter.

Gemäß einem ersten Aspekt betrifft die Erfindung eine Leuchtenoptik, welche einen flächigen Lichtleiter sowie ein Linsenblockraster aufweist. Der flächige Lichtleiter weist zwei gegenüberliegende flächige Seiten auf. Das Linsenblockraster ist an einer ersten der beiden flächigen Seiten des Lichtleiters derart angeordnet, dass die Linsenblockrasterelemente des Linsenblockrasters in flächigem Kontakt mit der ersten flächigen Seite stehen. Bevorzugt sind die Linsenblockrasterelemente mit dem Lichtleiter unlösbar beispielsweise über eine Klebeverbindung verbunden. Die zweite flächige Seite (also die der ersten flächigen Seite gegenüberliegende flächige Seite) des Lichtleiters weist eine Struktur mit Diffusorelementen auf. Die Diffusorelemente sind jeweils gegenüber einem der Linsenblockrasterelemente vorgesehen. Mit anderen Worten sind die Diffusorelemente jeweils gegenüber einem der Kontaktbereiche zwischen den Linsenblockrasterelementen und dem Lichtleiter vorgesehen. Dabei sind die Diffusorelemente aufgrund der entsprechenden Anordnung derart vorgesehen, um in den Lichtleiter eingekoppeltes Licht diffus zu streuen und wenigstens teilweise über das jeweils gegenüberliegende Linsenblockrasterelement, also das dem entsprechenden Diffusorelement zugeordnete Linsenblockrasterelement, abzugeben.

Durch die vorliegende Erfindung wird es somit ermöglicht, das aufgrund der entsprechend den Linsenblockrasterelementen gegenüberliegend vorgesehenen Diffusorelemente, welche also gezielt im Bereich der jeweiligen Linsenblockrasterelemente auf der dem jeweiligen Linsenblockrasterelement gegenüberliegenden Seite des Lichtleiters vorgesehen sind, diffus streuende Elemente vorgesehen sind, über die eine gleichmäßige und bevorzugt Lambertsche Lichtabgabe über die einzelnen Linsenblockrasterelemente ermöglicht wird, was wiederum zu einer blickrichtungsunabhängigen Lichtabgabe bzw. Lichtabgabewirkung führt. Die Diffusorelemente sind also bevorzugt bezüglich dem ihnen jeweils gegenüberliegenden Linsenblockrasterelement derart ausgebildet und angeordnet, dass sie eine Lichtabgabe über die Leuchtenoptik gemäß dem Lambertschen Gesetz ermöglichen.

Das Diffusorelement ist vorzugsweise im Wesentlichen punktförmig ausgebildet, so dass es einerseits einfach vorgesehen und dennoch die Leuchte nur im geringen Maße beeinflussend bereitgestellt ist.

Gemäß einer Ausgestaltungsform kann das Diffusorelement als Strukturelement auf der zweiten flächigen Seite des Lichtleiters ausgebildet sein. Als solches Strukturelement ist beispielsweise eine vorzugsweise räumlich begrenzte Aufrauhung der Lichtleiteroberfläche in den entsprechenden Bereichen denkbar.

Alternativ oder zusätzlich ist es auch denkbar, dass das Diffusorelement als separates Strukturelement auf der zweiten flächigen Seite des Lichtleiters vorgesehen ist. Ein solches separates Strukturelement kann beispielsweise eine Beschichtung umfassen, welche auf der Lichtleiteroberfläche, also auf der Oberfläche der zweiten flächigen Seite, ausgebildet bzw. aufgebracht ist. Die Beschichtung kann aus einem vorzugsweise aufgedruckten und ferner vorzugsweise reflektierenden (bspw. weißen) Lack bestehen. Somit kann mittels eines einfachen Druckverfahrens der Lichtleiter mit entsprechenden Diffusorelementen versehen werden.

Gemäß einer alternativen oder zusätzlichen Ausgestaltungsform kann die Beschichtung auch einen Kleber aufweisen, welcher in diesem Fall auf der zweiten flächigen Seite aufgetragen ist. Der Kleber kann ferner Streupartikel aufweisen, um eine diffuse Streuung des auftreffenden Lichts verbessert bereitzustellen.

Die Leuchtenoptik kann ferner ein Reflektorelement aufweisen, welches an der zweiten flächigen Seite des Lichtleiters angrenzend angeordnet ist und mit dem Lichtleiter über Verbindungsstellen verbunden ist. Die Verbindungsstellen können dabei wenigstens teilweise derart gestaltet sein, dass sie wenigstens einen Teil der Diffusorelemente bilden. Das Bereitstellen eines entsprechenden Reflektorelements auf der der Lichtabgabeseite gegenüberliegenden Seite hat den zusätzlichen Vorteil, dass grundsätzlich an der zweiten flächigen Seite des Lichtleiters womöglich unerwünscht austretendes Licht in den Lichtleiter zurückgeführt werden kann. Die Verbindung des Reflektorelements mit dem Lichtleiter kann in diesem Fall gleichzeitig als Diffusorelement genutzt werden, um in diesem Bereich das Licht gemäß einer Lambertschen Lichtverteilung über die Lichtabgabeseite, also die erste flächige Seite des Lichtleiters und weiter die Lichtblockrasterelemente, diffus abzustrahlen.

Das Reflektorelement kann eine Folie aufweisen oder aus einer Folie bestehen. Die Folie kann aus PET hergestellt sein und vorzugsweise eine mikrozellulare PET-Folie sein. Das Reflektorelement ist bevorzugt aus einem gut reflektierenden Material hergestellt und insbesondere weiß. Dabei ist es jedoch nicht erforderlich, dass sich das Reflektorelement über den gesamten flächigen Lichtleiter erstreckt, sofern entsprechende Diffusorelemente in beliebiger, zuvor beschriebener Weise vorgesehen sind, um eine entsprechend homogene Lichtabgabe zu erzielen.

Die Verbindungsstellen zur Verbindung des Reflektorelements mit dem Lichtleiter können beispielsweise durch Heißprägen und/oder Ultraschallschweißen und/oder Reibschweißen und/oder Laserschweißen gebildet sein. Auch ist es denkbar, dass die Verbindungsstellen einen Kleber aufweisen bzw. durch Kleber gebildet sind, um das Reflektorelement an dem Lichtleiter zu befestigen und somit gleichzeitig die entsprechenden Diffusorelemente zu bilden. Hierbei kann es sich um die zuvor beschriebene Beschichtung in Form eines Klebers handeln.

Auch eine beliebige Kombination aller zuvor beschriebenen Ausgestaltungsformen des Diffusorelements ist denkbar, wobei ein einzelnes Diffusorelement ebenso eines oder mehrere der vorbezeichneten Ausgestaltungsformen umfassen kann.

Der Lichtleiter und /oder das Reflektorelement können beispielsweise aus PMMA hergestellt sein.

Der Lichtleiter kann einen die flächigen Seiten verbindenden und vorzugsweise umlaufenden Stirnbereich aufweisen, wobei wenigstens ein Teil des Stirnbereichs zur Einkopplung von Licht in den Lichtleiter ausgebildet ist. Der Lichtleiter kann jede beliebige Form aufweisen und beispielsweise eckig (viereckig; rechteckig und dergleichen), rund, oval oder auch eine Freiformgestalt aufweisen.

Gemäß einem zweiten Aspekt betrifft die Erfindung eine Leuchte mit einer erfindungsgemäßen Leuchtenoptik. Eine derartige Leuchte kann ferner ein Leuchtmittel, insbesondere eine LED, zur Einkopplung von Licht in den Lichtleiter aufweisen. Die Einkopplung des Lichts findet dabei bevorzugt über wenigstens einen Teil des Stirnbereichs des Lichtleiters statt, so dass das Licht gezielt in den Lichtleiter eingekoppelt werden und sich in diesem ausbreiten kann, um dann an den entsprechenden Stellen insbesondere über die Lichtblockrasterelemente aus der Leuchtenoptik ausgekoppelt zu werden. Durch die erfindungsgemäße Ausgestaltung der Leuchtenoptik kann somit eine besonders homogene Lichtabgabe und Lichtabgabewirkung der Leuchte erzielt werden. Die Diffusorelemente sind bezüglich dem ihnen jeweils gegenüberliegenden Linsenblockrasterelement vorzugsweise derart ausgebildet und angeordnet, dass die Leuchte die Eigenschaft eines Lambert-Strahlers erfüllt. Auf diese Weise wird eine besonders homogene Lichtabgabe und Lichtabgabewirkung der Leuchte erzielt.

Weitere Vorteile und Merkmale der vorliegenden Erfindung werden im Rahmen der folgenden Ausführungsbeispiele anhand der Figuren der begleitenden Zeichnungen beschrieben. Es zeigen:
- Figur 1a:: eine schematische Seitenansicht einer erfindungsgemäßen Leuchte mit erfindungsgemäßer Leuchtenoptik (mit Reflektorelement) gemäß einem ersten Ausführungsbeispiel der Erfindung,
- Figur 1b:: Lambertsche Lichtverteilung eines Lambert-Strahlers, und
- Figur 2:: eine schematische Seitenansicht einer erfindungsgemäßen Leuchte mit erfindungsgemäßer Leuchtenoptik gemäß einem zweiten Ausführungsbeispiel der Erfindung.

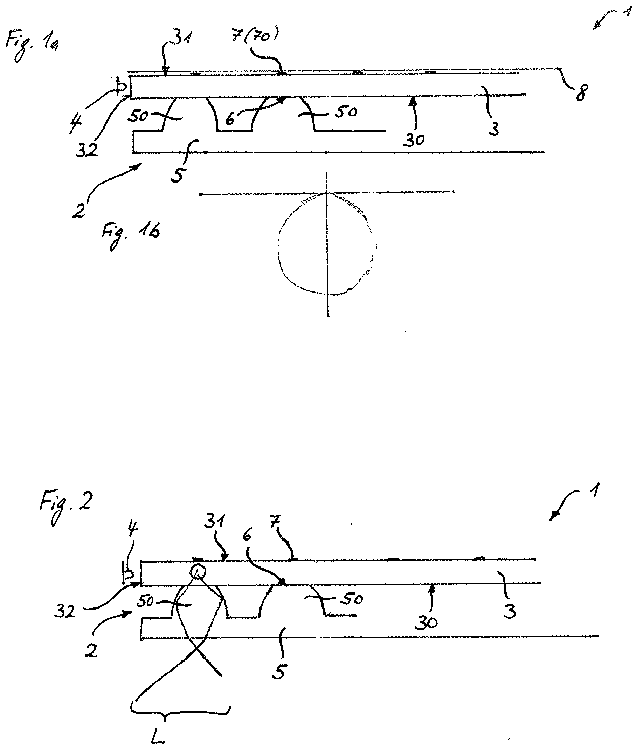

Die Figuren 1 und 2 zeigen jeweils eine Leuchte 1 gemäß der Erfindung. Die Leuchte 1 weist eine erfindungsgemäße Leuchtenoptik 2 auf, welche für sich genommen auch Gegenstand der vorliegenden Erfindung ist.

Die Leuchtenoptik 2 weist einen flächigen Lichtleiter 3 auf, welcher eine erste flächige Seite 30 sowie eine zweite flächige Seite 31 aufweist. Die beiden flächigen Seiten 30, 31 liegen einander gegenüber. Der Lichtleiter 2 weist bevorzugt einen die beiden flächigen Seiten 30, 31 verbindenden und vorzugsweise umlaufenden Stirnbereich 32 auf, wobei wenigstens ein Teil des Stirnbereichs 32 zur Einkopplung von Licht in den Lichtleiter 2 ausgebildet ist. Zur Einkopplung von Licht in den Lichtleiter 2 weist die Leuchte 1 bevorzugt ein Leuchtmittel 4 auf, insbesondere eine LED bzw. ein Led-Modul, welche bevorzugt dem Stirnbereich 32 des Lichtleiters 2 derart zugeordnet ist, um bevorzugt über den wenigstens einen Teil des Stirnbereichs 32 des Lichtleiters 2 Licht in den Lichtleiter 2 einzukoppeln.

Der Lichtleiter 2 ist bevorzugt aus PMMA hergestellt. Jedoch sind auch andere bekannte Materialien für den Lichtleiter 2 denkbar.

Erfindungsgemäß weist die Leuchtenoptik 1 ferner ein Linsenblockraster 5 auf, welches an der ersten flächigen Seite 30 des Lichtleiters 2 angeordnet ist; und zwar derart, dass die Linsenblockrasterelemente 50 des Linsenblockrasters 5 in flächigem Kontakt mit der ersten flächigen Seite 30 stehen. Der Übersichtlichkeit halber sind nur jeweils zwei Linsenblockrasterelemente 50 dargestellt, wobei sich in den Figuren nach rechts weitere Linsenblockrasterelemente 50 in gleicher Weise anschließen. Die Bereiche des flächigen Kontakts zwischen den Linsenblockrasterelementen 50 und dem Lichtleiter 2 werden im Rahmen der Erfindung auch als Kontaktbereiche 6 bezeichnet.

Erfindungsgemäß weist die zweite flächige Seite 31 des Lichtleiters 3 eine Struktur mit Diffusorelementen 7 auf. Unter "Struktur" wird im Rahmen der Erfindung eine gewisse verteilte Anordnung der einzelnen Diffusorelemente verstanden, welche, wie im Weiteren beschrieben wird, insbesondere in Abhängigkeit der Anordnung der Linsenblockrasterelemente 50 bezüglich des Lichtleiters 3 ausgebildet ist und besonders bevorzugt eine Matrixstruktur umfasst.

Erfindungsgemäß sind die einzelnen Diffusorelemente 7 jeweils gegenüber einem der Linsenblockrasterelemente 50 vorgesehen bzw. angeordnet. Mit anderen Worten sind also die Diffusorelemente 7 jeweils gegenüber einem der Kontaktbereiche 6 zwischen Linsenblockrasterelement 50 und Lichtleiter 3 vorgesehen. Die Diffusorelemente 7 sind derart vorgesehen, um in den Lichtleiter 3 eingekoppeltes Licht diffus zu streuen und wenigstens teilweise über das jeweils gegenüberliegende Linsenblockrasterelement 50 abzugeben.

Insbesondere können die Diffusorelemente 7 bezüglich dem ihnen jeweils gegenüberliegenden Linsenblockrasterelement 50 derart ausgebildet und angeordnet sein, dass sie eine Lichtabgabe L über die Leuchtenoptik 2 gemäß dem Lambertschen Gesetz ermöglichen. Dies ist beispielhaft für das linke Lichtblockrasterelement 50 in Figur 2 dargestellt und gilt in gleicher Weise für alle anderen Linsenblockrasterelemente 50 und in gleicher Weise auch für das erste Ausführungsbeispiel.

Das Diffusorelement 7 ist bevorzugt im Wesentlichen punktförmig ausgebildet, wobei es vorzugsweise senkrecht zur Erstreckungsebene des Lichtleiters 3 gesehen mittig bezüglich des ihm zugeordneten (also gegenüberliegenden) Linsenblockrasterelements 50 bzw. Kontaktbereichs 6 angeordnet ist; bevorzugt sind diese koaxial zueinander ausgerichtet.

Das Diffusorelement 7 kann alternativ oder zusätzlich auch als Strukturelement auf der zweiten flächigen Seite 31 des Lichtleiters 3 ausgebildet sein. Ein solches Strukturelement kann beispielsweise als Aufrauhung der Lichtleiteroberfläche, also der Oberfläche der zweiten flächigen Seite 31 des Lichtleiters 3, ausgebildet sein.

Es ist jedoch auch denkbar, dass das Diffusorelement 7 alternativ oder zusätzlich als separates Strukturelement auf der zweiten flächigen Seite 31 des Lichtleiters 3 vorgesehen bzw. aufgebracht ist. "Separat" bedeutet im Rahmen der Erfindung, dass das Strukturelement zusätzlich auf oder an dem Lichtleiter 3 nachträglich vorgesehen wird, auch wenn es nach dem Vorsehen mit dem Lichtleiter 3 fest (und unlösbar) verbunden bzw. einteilig bereitgestellt sein sollte.

Das separate Strukturelement 7 kann beispielsweise als Beschichtung auf der Lichtleiteroberfläche, also der Oberfläche der zweiten flächigen Seite 31, ausgebildet sein. Die Beschichtung kann dabei vorzugsweise aufgedruckt sein und besonders vorzugsweise aus einem (reflektierenden) Lack (bspw. weißer Lack) bestehen, welcher beispielsweise auf die Oberfläche der zweiten flächigen Seite 31 des Lichtleiters 3 aufgedruckt wird.

Auch ist es denkbar, dass die Beschichtung einen Kleber aufweist. Dieser Kleber kann, wie im Weiteren noch beschrieben wird, auch zusätzliche Funktionen erfüllen. Insbesondere kann der Kleber bzw. die Beschichtung Streupartikel aufweisen, die eine diffuse Streuung des auftreffenden Lichts ermöglichen oder verbessern. Solche Streupartikel können beispielsweise Titandioxid aufweisen.

Die Leuchtenoptik 2 kann ferner ein Reflektorelement 8 aufweisen, wie es in Figur 1 dargestellt ist. Das Reflektorelement 8 ist an der zweiten flächigen Seite 31 des Lichtleiters 3 angrenzend angeordnet und mit dem Lichtleiter 3 (nur) über Verbindungsstellen 70 verbunden. Die Verbindungsstellen 70 können wenigstens teilweise derart gestaltet sein, dass sie wenigstens einen Teil der Diffusorelemente 7 oder alle Diffusorelemente 7 bilden/aufweisen. Die Verbindungsstellen 70 können hierbei beispielsweise durch Heißprägen und/oder Ultraschallschweißen und/oder Reibschweißen und/oder Laserschweißen gebildet sein. Auch können die Verbindungsstellen einen Kleber und insbesondere den vorbezeichneten Kleber aufweisen, welcher dann gleichzeitig als Diffusorelement 7 dient.

Das Reflektorelement 8 kann vorzugsweise eine Folie aufweisen bzw. aus einer Folie bestehen. Die Folie 8 ist dabei bevorzugt aus PET hergestellt und insbesondere bevorzugt eine mikrozellulare PET-Folie. Auch kann das Reflektorelement aus PMMA hergestellt sein. Insbesondere bevorzugt ist das Reflektorelement aus einem gut reflektierenden Material hergestellt und insbesondere weiß.

Durch die Bereitstellung des Reflektorelements 8, dessen Verbindungsstellen 70 wenigstens zu Teil gleichzeitig als Diffusorelement 7 dienen, wird eine besonders effektive Leuchtenoptik 2 bereitgestellt, da aufgrund des Reflektorelements 8 gegebenenfalls an der zweiten flächigen Seite 31 des Lichtleiters 3 austretendes Licht in den Lichtleiter 3 zurückgeführt werden kann, während die vorzugsweise punktuell verteilt und den entsprechenden Linsenblockrasterelementen 50 zugeordnet gegenüberliegenden Verbindungsstellen 70 als erfindungsgemäße Diffusorelemente 7 dienen, über die das Licht besonders bevorzugt gemäß einer Lambertschen Lichtverteilung (vgl. Fig. 1b) über die Lichtabgabeseite der Leuchtenoptik 2 (also die erste flächige Seite 30 des Lichtleiters 3 sowie in der Folge wenigstens teilweise über die Linsenblockrasterelemente 50 und somit das Linsenblockraster 5) diffus abgestrahlt werden kann.

Eine mit einer derart ausgebildeten Leuchtenoptik 2 vorgesehene Leuchte 1 ist bevorzugt als Lambert-Strahler ausgebildet. Hierzu sind insbesondere die Diffusorelemente 7 bezüglich den ihnen jeweils gegenüberliegenden Linsenblockrasterelement 50 derart ausgebildet und angeordnet, dass die Leuchte 1 die Eigenschaften eines Lambert-Strahlers erfüllt. Vorzugsweise ist jedem Linsenblockratserelement 50 wenigstens ein Diffusorelement 7 gegenüberliegend (bzgl. des Lichtleiters 3) zugeordnet. Vorzugsweise sind sowohl Linsenblockrasterlemente 50 als auch Diffusorelemente 7 in Form einer Raster- oder Matrixverteilung angeordnet und einander zugeordnet.

Die Erfindung ist nicht auf die vorbeschriebenen Ausführungsbeispiele beschränkt, solange sie vom Gegenstand der folgenden Ansprüche umfasst ist. Insbesondere ist es zur Ausbildung einer erfindungsgemäßen Leuchtenoptik nicht erforderlich, dass jedem Linsenblockrasterelement 50 ein Diffusorelement 7 zugeordnet ist, solange eine Steigerung in der Homogenität der Lichtabgabe erzielt werden kann. Lediglich in einer bevorzugten Ausgestaltungsform ist jedem Linsenblockrasterelement 50 auch ein Diffusorelement 7 gegenüberliegend zugeordnet. Darüber hinaus ist die Erfindung weder auf die Anzahl der Linsenblockrasterelemente noch die Dimensionen der einzelnen Bauteile, noch die Anzahl der verwendeten Leuchtmittel sowie deren genaue Anordnung, noch die vorbeschriebenen Materialien beschränkt, sofern sie vom Gegenstand der folgenden Ansprüche einer Leuchtenoptik 2 und Leuchte 1 umfasst sind. Auch ist nicht zwingend erforderlich, eine Lambertsche Lichtverteilung bzw. Lichtabgabe zu erzielen, wobei eine eben solche als besonders bevorzugte, da besonders homogene Lichtabgabe erwünscht ist.

## Patentansprüche

1. Leuchtenoptik (2) aufweisend:
einen flächigen Lichtleiter (3) mit zwei gegenüberliegenden flächigen Seiten (30, 31),
ein Linsenblockraster (5), welches an einer ersten (30) der beiden flächigen Seiten (30, 31) derart angeordnet ist, dass die Linsenblockrasterelemente (50) des Linsenblockrasters (5) in flächigem Kontakt mit der ersten flächigen Seite (30) stehen,
wobei die zweite flächige Seite (31) eine Struktur mit Diffusorelementen (7) aufweist, wobei die Diffusorelemente (7) jeweils gegenüber einem der Linsenblockrasterelemente (50) und gegenüber einem der Kontaktbereiche (6) des flächigen Kontakts zwischen den Linsenblockrasterelementen (50) und dem Lichtleiter (3) vorgesehen sind, um in den Lichtleiter (3) eingekoppeltes Licht diffus zu streuen und wenigstens teilweise über das jeweils gegenüberliegende Linsenblockrasterelement (50) abzugeben,
wobei die Linsenblockrasterelemente (50) in Richtung des Lichtleiters (3) vorstehen.

2. Leuchtenoptik (2) gemäß Anspruch 1, wobei die Diffusorelemente (7) bezüglich dem ihnen jeweils gegenüberliegenden Linsenblockrasterelement (50) derart ausgebildet und angeordnet sind, dass sie eine Lichtabgabe über die Leuchtenoptik (2) gemäß dem Lambertschen Gesetz ermöglichen.

3. Leuchtenoptik (2) gemäß Anspruch 1 oder 2, wobei das Diffusorelement (7) im Wesentlichen punktförmig ausgebildet ist.

4. Leuchtenoptik (2) gemäß einem der vorhergehenden Ansprüche, wobei das Diffusorelement (7) als Strukturelement auf der zweiten flächigen Seite (31) des Lichtleiters (3) ausgebildet ist, vorzugsweise als Aufrauhung der Lichtleiteroberfläche.

5. Leuchtenoptik (2) gemäß einem der vorhergehenden Ansprüche, wobei das Diffusorelement (7) als separates Strukturelement auf der zweiten flächigen Seite (31) des Lichtleiters (3) vorgesehen ist.

6. Leuchtenoptik (2) gemäß Anspruch 5, wobei das separate Strukturelement als Beschichtung auf der Lichtleiteroberfläche ausgebildet ist,
wobei die Beschichtung bevorzugt aus einem vorzugsweise aufgedruckten und vorzugsweise reflektierenden Lack besteht, und
wobei die Beschichtung bevorzugt einen Kleber aufweist.

7. Leuchtenoptik (2) gemäß einem der vorhergehenden Ansprüche, wobei die Leuchtenoptik (2) ferner ein Reflektorelement (8) aufweist, welches an der zweiten flächigen Seite (31) des Lichtleiters (3) angrenzend angeordnet ist und mit dem Lichtleiter (3) über Verbindungsstellen (70) verbunden ist, wobei die Verbindungsstellen (70) wenigstens teilweise derart gestaltet sind, dass sie wenigstens einen Teil der Diffusorelemente (7) bilden.

8. Leuchtenoptik (2) gemäß Anspruch 7,
wobei das Reflektorelement (8) eine Folie aufweist oder aus einer Folie besteht, wobei die Folie bevorzugt aus PET hergestellt ist, besonders vorzugsweise eine mikrozellulare PET-Folie ist, und/oder wobei das Reflektorelement (8) aus einem gut reflektierenden Material hergestellt ist und insbesondere weiß ist.

9. Leuchtenoptik (2) gemäß Anspruch 7 oder 8, wobei die Verbindungsstellen (70) durch Heißprägen und/oder Ultraschallschweißen und/oder Reibschweißen und/oder Laserschweißen gebildet sind und/oder einen Kleber aufweisen.

10. Leuchtenoptik (2) gemäß einem der vorhergehenden Ansprüche, wobei der Lichtleiter (3) und/oder das Reflektorelement (8) aus PMMA hergestellt sind.

11. Leuchtenoptik (2) gemäß einem der vorhergehenden Ansprüche, wobei der Lichtleiter (3) einen die flächigen Seiten (30, 31) verbindenden und vorzugsweise umlaufenden Stirnbereich (32) aufweist, wobei wenigstens ein Teil des Stirnbereichs (32) zur Einkopplung von Licht in den Lichtleiter (3) ausgebildet ist.

12. Leuchtenoptik (2) gemäß einem der vorhergehenden Ansprüche, wobei die Linsenblockrasterelemente (50) mit dem Lichtleiter (3) unlösbar beispielsweise über eine Klebeverbindung verbunden sind.

13. Leuchte (1) aufweisend eine Leuchtenoptik (2) gemäß einem der vorhergehenden Ansprüche.

14. Leuchte (1) gemäß Anspruch 13, ferner aufweisend ein Leuchtmittel (4), insbesondere eine LED, zur Einkopplung von Licht in den Lichtleiter (3), vorzugsweise über wenigstens einen Teil des Stirnbereichs (32) des Lichtleiters (3).

15. Leuchte (1) gemäß Anspruch 13 oder 14, wobei die Diffusorelemente (7) bezüglich dem ihnen jeweils gegenüberliegenden Linsenblockrasterelement (50) derart ausgebildet und angeordnet sind, dass die Leuchte (1) die Eigenschaften eines Lambert-Strahlers erfüllt.

## Claims

1. A lamp optics (2) comprising:
a laminar light guide (3) having two opposing laminar sides (30, 31),
a lens block grid (5) arranged on a first (30) of the two laminar sides (30,31) such that the lens block grid elements (50) of the lens block grid (5) are in flat contact with the first laminar side (30),
wherein the second laminar side (31) has a structure with diffuser elements (7), wherein the diffuser elements (7) are respectively provided opposite one of the lens block grid elements (50) and opposite one of the contact areas (6) of the laminar contact between the lens block grid elements (50) and the light guide (3) to diffusely scatter light coupled into the light guide (3) and to emit at least partially via each opposite lens block grid element (50),
wherein the lens block grid element (50) of the light guide make out.

2. The lamp optics (2) according to claim 1, wherein the diffuser elements (7) are configured and arranged with respect to the lens block grid element (50) opposite to each such that they allow light emission via the lamp optics (2) in accordance with the Law of Lambert.

3. The lamp optics (2) according to claim 1 or 2, wherein the diffuser element (7) is substantially point-shaped.

4. The lamp optics (2) according to any one of the preceding claims, wherein the diffuser element (7) is configured as a structural element on the second laminar side (31) of the light guide (3), preferably as a roughening of the light guide surface.

5. The lamp optics (2) according to any one of the preceding claims, wherein the diffuser element (7) is provided as a separate structural element on the second laminar side (31) of the light guide (3).

6. The lamp optics (2) according to claim 5, wherein the separate structural element is configured as a coating on the light guide surface,
wherein the coating is preferably made of a preferably printed and
preferably reflective paint, and
wherein the coating preferably comprises an adhesive.

7. The lamp optics (2) according to any one of the preceding claims, wherein the lamp optics (2) further comprises a reflector element (8), which is arranged adjacent to the second laminar side (31) of the light guide (3) and connected to the light guide (3) via connection points (70), wherein the connection points (70) are at least partially designed to form at least part of the diffuser elements (7).

8. The lamp optics (2) according to claim 7,
wherein the reflector element (8) comprises a foil or consists of a foil, wherein the foil is preferably made of PET, preferably is a microcellular PET foil, and/or wherein the reflector element (8) is made of a well-reflective material and is in particular white.

9. The lamp optics (2) according to claim 7 or 8, wherein the connection points (70) are formed by hot embossing and/or ultrasonic welding and/or friction welding and/or laser welding and/or comprise an adhesive.

10. The lamp optics (2) according to any one of the preceding claims, wherein the light guide (3) and/or the reflector element (8) are made of PMMA.

11. The lamp optics (2) according to any one of the preceding claims, wherein the light guide (3) comprises a front region (32) connecting the laminar sides (30, 31), preferably circumferential, wherein at least a part of the front region (32) is configured for coupling light into the light guide (3).

12. The lamp optics (2) according to any one of the preceding claims, wherein the lens block grid elements (50) are indissolvably connected to the light guide (3), for example via an adhesive connection.

13. A lamp (1) comprising a lamp optics (2) according to any one of the preceding claims.

14. The lamp (1) according to claim 13, further comprising a light source (4), in particular an LED, for coupling light into the light guide (3), preferably via at least a part of the front region (32) of the light guide (3).

15. The lamp (1) according to claim 13 or 14, wherein the diffuser elements (7) are configured and arranged with respect to the respective lens block grid element (50) opposite them such that the lamp (1) satisfies the properties of a lambert lamp.

## Revendications

1. Optique d'éclairage (2) présentant :
un guide de lumière (3) plat doté de deux côtés plats (30, 31) opposés,
une grille de lentilles en bloc (5) disposée sur un premier (30) des deux côtés plats (30, 31) de manière que les éléments (50) de la grille de lentilles en bloc (5) soient en contact plan avec le premier côté plat (30) ;
le deuxième côté plat (31) présentant une structure dotée d'éléments diffuseurs (7), les éléments diffuseurs (7) étant respectivement prévus face à l'un des éléments (50) de la grille de lentilles en bloc et face à l'une des zones de contact (6) créées par ledit contact plan entre les éléments (50) de la grille de lentilles en bloc et le guide de lumière (3), afin de réaliser une diffusion de la lumière injectée dans ledit guide de lumière (3) et une émission de lumière au moins partielle à travers l'élément (50) de la grille de lentilles en bloc correspondant qui lui fait face,
lesdits éléments (50) de la grille de lentilles en bloc faisant saillie en direction du guide de lumière (3).

2. Optique d'éclairage (2) selon la revendication 1, dans laquelle les éléments diffuseurs (7) sont conçus et disposés, par rapport à l'élément (50) de la grille de lentilles en bloc respectif qui leur fait face, de façon à permettre une émission de lumière à travers l'optique d'éclairage (2) selon la loi de Lambert.

3. Optique d'éclairage (2) selon la revendication 1 ou 2, dans laquelle l'élément diffuseur (7) est formé essentiellement en un point.

4. Optique d'éclairage (2) selon l'une des revendications précédentes, dans laquelle l'élément diffuseur (7) constitue un élément structural sur le deuxième côté plat (31) du guide de lumière (3), de préférence sous la forme d'une rugosité sur la surface du guide de lumière.

5. Optique d'éclairage (2) selon l'une des revendications précédentes, dans laquelle l'élément diffuseur (7) est prévu sur le deuxième côté plat (31) du guide de lumière (3) sous la forme d'un élément structural séparé.

6. Optique d'éclairage (2) selon la revendication 5, dans laquelle l'élément structural séparé est conçu sous forme de revêtement sur la surface du guide de lumière,
dans laquelle le revêtement se compose de préférence d'un vernis qui est de préférence imprimé et de préférence réfléchissant, et
dans laquelle le revêtement présente de préférence un adhésif.

7. Optique d'éclairage (2) selon l'une des revendications précédentes, ladite optique d'éclairage (2) présentant en outre un élément réflecteur (8) disposé de manière adjacente au deuxième côté plat (31) du guide de lumière (3) et relié au guide de lumière (3) par des points de liaison (70), lesdits points de liaison (70) étant conçus au moins en partie de manière à former au moins une partie des éléments diffuseurs (7).

8. Optique d'éclairage (2) selon la revendication 7,
dans laquelle l'élément réflecteur (8) présente un élément en feuille ou est constitué d'un élément en feuille, lequel élément en feuille est de préférence réalisé en PET et consiste tout préférablement en une feuille de PET microcellulaire, et/ou l'élément réflecteur (8) est réalisé dans un matériau bien réfléchissant et est notamment de couleur blanche.

9. Optique d'éclairage (2) selon la revendication 7 ou 8, dans laquelle les points de liaison (70) sont formés par estampage à chaud et/ou soudage à ultrasons et/ou soudage par friction et/ou soudage laser et/ou présentent un adhésif.

10. Optique d'éclairage (2) selon l'une des revendications précédentes, dans laquelle le guide de lumière (3) et/ou l'élément réflecteur (8) sont réalisés en PMMA.

11. Optique d'éclairage (2) selon l'une des revendications précédentes, dans laquelle le guide de lumière (3) présente une zone latérale (32) de préférence sur tout le pourtour, laquelle relie les côtés plats (30, 31), au moins une partie de ladite zone latérale (32) permettant l'injection de lumière dans le guide de lumière (3).

12. Optique d'éclairage (2) selon l'une des revendications précédentes, dans laquelle les éléments (50) de la grille de lentilles en bloc sont reliés de manière inamovible au guide de lumière (3), par exemple au moyen d'une liaison collée.

13. Luminaire (1) présentant une optique d'éclairage (2) selon l'une des revendications précédentes.

14. Luminaire (1) selon la revendication 13, comprenant en outre un moyen luminescent (4), notamment une LED, destinée à injecter de la lumière dans le guide de lumière (3), de préférence par au moins une partie de ladite zone latérale (32) du guide de lumière (3) .

15. Luminaire (1) selon la revendication 13 ou 14, dans lequel les éléments diffuseurs (7) sont conçus et disposés, par rapport à l'élément (50) de la grille de lentilles en bloc respectif qui leur fait face, de façon à permettre au luminaire (1) de satisfaire aux propriétés d'un émetteur dit de Lambert.
